(19) Europäisches Patentamt

European Patent Office

Office européen des brevets

(11) Veröffentlichungsnummer: **0 416 487 A2**

(12) **EUROPÄISCHE PATENTANMELDUNG**

(21) Anmeldenummer: **90116816.1**

(22) Anmeldetag: **01.09.90**

(51) Int. Cl.⁵: **G10K 11/28**

(30) Priorität: **08.09.89 DE 3930052**

(43) Veröffentlichungstag der Anmeldung:
**13.03.91 Patentblatt 91/11**

(84) Benannte Vertragsstaaten:
**AT CH DE ES FR GB IT LI NL SE**

(71) Anmelder: **Stog, Arnulf**
**Menzinger Strasse 97**
**W-8000 München 50(DE)**

(72) Erfinder: **Stog, Arnulf, Dipl.-Ing. Dipl.-Kfm.**
**Menzinger Strasse 97**
**W-8000 München 50(DE)**
Erfinder: **Pöschl, Günther**
**Am Tribergle 2**
**W-7052 Schwaikheim(DE)**

(74) Vertreter: **Patentanwälte Dipl.-Ing. R.**
**Splanemann Dr. B. Reitzner Dipl.-Ing. K.**
**Baronetzky**
**Tal 13**
**W-8000 München 2(DE)**

(54) **Schallwandler.**

(57) Bei einem Schallwandler (10) ist es vorgesehen, ein Piezoelement (12) mit einer besonderen Reflexionswand (38) zu kombinieren, wobei ein Arbeitsbereich (40) etwa in der Mitte zwischen dem Piezoelement (12) und der Reflexionswand (38) vorgesehen ist. Ein Flüssigkeits-/Gasgemisch (60) wird mit Ultraschall im Bereich von 200 MHz bis 2 GHz beaufschlagt.

FIG. 2

EP 0 416 487 A2

Die Erfindung betrifft einen Schallwandler, gemäß dem Oberbegriff von Anspruch 1.

Derartige Schallwandler dienen beispielsweise der Erzeugung von Druckwellen in einer Flüssigkeit, und zwar durch Signalgabe oder zur Erzeugung eines Schallfeldes in der Flüssigkeit.

Aus größerer Entfernung betrachtet, ist die Schallquelle hierbei als punktförmig anzusehen, so daß die Schallwellenfronten im wesentlichen eine kugelförmige Gestalt haben.

Um eine möglichst gleichmäßige Beschallung der Flüssigkeit zu erreichen, ist es vorgeschlagen worden, das Piezoelement an einer zentralen Stelle anzuordnen. Die Überlegungen wurden hierbei von dem Grundgedanken getragen, daß eine möglichst gleichmäßige Beschallung günstig ist, wenn ein Schallfeld in der Flüssigkeit erzeugt werden soll.

Ferner ist es bekannt, der Schallquelle eine keulenförmige Abstrahlcharakteristik zu vermitteln, indem man den Schallwandler in einem Horn anordnet, dessen Abmessungen an die Schallabgabe angepaßt sind. Ein derartiges Horn ist jedoch frequenzabhängig, muß nach einer ganz bestimmten, genau berechneten Kurve hergestellt werden und ist insofern in der Herstellung vergleichsweise teuer.

Demgegenüber ist es Aufgabe der Erfindung, einen Schallwandler gemäß dem Oberbegriff von Anspruch 1 bereitzustellen, der sich vergleichsweise günstig herstellen läßt, eine reaktionswirksame Bestrahlung ermöglicht und dennoch frequenzunkritisch ist.

Diese Aufgabe wird erfindungsgemäß durch Anspruch 1 gelöst. Vorteilhafte Weiterbildungen ergeben sich aus den Unteransprüchen.

Überraschend läßt sich mit den erfindungsgemäßen Maßnahmen eine Frequenzunabhängigkeit mit einem größtmöglichen Wirkungsgrad koppeln: Die von der - flachen - Abstrahlfläche des Piezoelements ausgesandten Schallwellen nehmen zwar mit zunehmendem Abstand mehr und mehr die Form kugelförmiger Schallwellen an, wie auch bei den Hornstrahlern. Durch geeignete Wahl des Abstands zwischen der erfindungsgemäßen Reflexionswand und der Abstrahlfläche gelingt es jedoch, die Schallwellen noch als relativ flache Wellenfronten auf die Reflexionswand auftreffen zu lassen und diese damit im Arbeitsbereich zu bündeln. Da der Arbeitsbereich von dem Piezoelement etwas beabstandet ist, wird er einerseits praktisch doppelt mit Schallwellen beaufschlagt. und andererseits wird verhindert, daß die Reflexionswand aufgrund einer Resonanz energieverzehrenden Biegebelastungen unterworfen würde: Die Schallwellen treffen nämlich - unabhängig von der Frequenz - zunächst am Außenrand der konkaven Reflexionswand auf und gelangen später zu den von der Abstrahlfläche weiter beabstandeten Teilen der Reflexionswand, also beispielsweise zur Mitte der Reflexionswand hin. Durch dieses Einleiten der Schwingungen wird die Reflexionswand lediglich Biegebelastungen ausgesetzt, denen sie aufgrund ihrer Formstabilität aber erheblichen Wiederstand entgegensetzt. Selbst wenn die Frequenz der eingeleiteten Schallwellen sehr groß gewählt wird, hat dies lediglich zur Folge, daß die nächste Schallfront den Außenrand der Reflexionswand bereits erreicht, bevor die vorherige Schallfront die Mitte der Reflexionswand erreicht hat.

Besonders günstig ist eine Wahl der Abmessungen dergestalt, daß ein Brennpunkt bzw. Bündelbereich der Reflexionswand etwa gleich weit von der Reflexionswand und der Abstrahlfläche entfernt ist. Die aufeinandertreffenden Druckmaxima und Druckminima wechseln einander dann mit miteinander überlagerten Amplituden ab, so daß ein periodisch stark schwingendes Feld von Druck- und Unterdruckspitzen erzeugt wird, dessen Ebenen leicht gebogen, aber im wesentlichen parallel zur Abstrahlfläche verlaufen.

Besonders vorteilhaft hierbei ist es, das Flüssigkeits-/Gasgemisch leicht schräg durch dieses Schallfeld strömen zu lassen.

Eine leicht schräge Beaufschlagung ergibt sich praktisch automatisch, wenn die Reflexionswand im wesentlichen als Parabel ausgebildet ist. Zudem kann bei Anordnung des erfindungsgemäßen Schallwandlers in einem Rohr od. dgl. dann einer etwaigen Volumenänderung aufgrund der Schallbeaufschlagung Rechnung getragen werden.

Die erfindungsgemäße Schallbeaufschlagung wird nicht durch eine kleine Ausnehmung in der Reflexionswand beeinträchtigt, durch welche besonders günstig Gas zuleitbar ist. Hierdurch läßt sich das Gas sehr leicht in den Arbeits- oder reaktiven Bereich bringen, wobei in an sich bekannter Weise durch entsprechende Düsenmundstücke die Größe der eintretenden Gasbläschen, soweit das Gas nicht in der Flüssigkeit gelöst ist, einstellbar ist.

Besonders günstig ist es hierbei, die Gaszuleitung mit ihrer Achse so auszurichten, daß sie den Brennpunkt der Parabel schneidet, jedoch den Parabelast leicht schräg, auch bezogen auf die gegenüberliegende Abstrahlfäche, durchtritt, so daß die eingeleitete Gasströmung der Flüssigkeitsströmung leicht schräg entgegensteht und das Gas gegen die Flüssigkeitsströmung etwa bis zum Beginn des Arbeitsbereichs gelangt, so daß das vorbereitete Flüssigkeits-/Gasgemisch über den gesamten Arbeitsbereich dem Schallfeld unterworfen ist.

Besonders vorteilhaft läßt sich der erfindungsgemäße Schallwandler für sonochemische Reaktionen einsetzen. Hierzu ist der Schallwandler längs eines unter Druck stehenden, flüssigkeits durchströmten Rohres dergestalt angeordnet, daß die Abstrahlfläche in einem Anschlußstutzen für das Piezoelement im wesentlichen bündig mit dessen vorderem Abschluß endet und die Rohrwandung einseitig durchtritt. Der Abstrahlfläche auf der anderen Seite des Rohres gegenüberliegend ist die parabolisch geformte Reflexionsfläche angeordnet, die eine Nase aufweist, an welcher der Strömungsquerschnitt stark verjüngt ist. Entsprechend dem parabolischen Verlauf weitet sich der Strömungsquerschnitt in Strömungsrichtung gesehen auf, so daß er im Arbeitsbereich in etwa dem Strömungsquerschnitt des Rohrs entspricht. Die Gaszufuhr erfolgt dann in einem Ausführungsbeispiel im wesentlichen senkrecht zur Rohrachse am Beginn des Arbeitsbereichs, also etwa in dem Bereich der parabolischen Reflexionswand, der am stärksten gekrümmt ist.

Die Anschlüsse die Piezoelements erfolgen zweckmäßigerweise dadurch, daß die dem Flüssigkeits-/Gasgemisch zugewandte Elektrode von hinten kontaktiert ist. Hierzu ist in dem Piezokristall eine Durchtrittsausnehmung vorgesehen. Die dem Flüssigkeits-/Gasgemisch zugewandte Elektrode besteht aus einem in der Flüssigkeit beständigen Material, wie V4A-Stahl. Separate Beschichtungen zur Verhinderung der Korrosion der Elektrode neigen nämlich dazu, sich abzulösen, zumal wenn der Schallwandlung im Frequenzbereich zwischen 200 MHz und 20 GHz betrieben wird.

Gemäß einer weiteren vorteilhaften Ausgestaltung ist es vorgesehen, den Schallwandler mit einer Frequenz zu speisen, die sich im Verhältnis von 1:10 ändert, beispielsweise von 2 GHz zu 200 MHz oder von 20 GHz zu 2 GHz. Hierdurch lassen sich die je günstigsten Arbeitspunkte überstreichen, ohne daß in einem langwierigen Verfahren die für die sonochemische Reaktion günstigste Frequenz ermittelt werden müßte. Bei diesem Wobbeln kommt der vorteilhafte Aspekt zum Tragen, daß der erfindungsgemäße Schallwandler nicht lediglich bei einer eng begrenzten Frequenz betreibbar ist.

Gemäß einer weiteren vorteilhaften Ausgestaltung ist es vorgesehen, im Strömungsverlauf vor, gemäß einer weiteren Ausgestaltung jedoch hinter, dem Schallwandler einen weiteren entsprechend vorzusehen, bei dem jedoch keine Gaszuleitung vorgesehen ist.

Weitere Einzelheiten, Merkmale und Vorteile ergeben sich aus der nachstehenden Beschreibung mehrerer Ausführungsbeispiele anhand der Zeichnung.

Es zeigen:

Fig. 1 eine schematische Darstellung der Ausbreitung der Schallwellen bei einem erfindungsgemäßen Schallwandler; und

Fig. 2 eine Schnittdarstellung eines erfindungsgemäßen Schallwandlers in einer weiteren Ausführungsform.

Ein erfindungsgemäßer Schallwandler 10 weist ein Piezoelement 12 auf, das in einem Befestigungsstutzen 14 an seinem Außenumfang gelagert ist. Das Piezoelement 12 besteht aus einer Außenelektrode 16, einem Piezokristall 18 und einer Innenelektrode 20. Die Anschlüsse 22 und 24 der Außenelektrode 16 und der Innenelektrode 20 sind mit einem Generator 26 verbunden, der in der Lage ist, eine Leistung von beispielsweise 100 W bei 200 MHz und 20 W bei 2 GHz abzugeben.

Entsprechend der abgegebenen Frequenz gerät der Piezokristall 18 in Schwingungen und strahlt diese Schwingungen ab. Hierbei wirkt die Außenelektrode 16 als Abstrahlfläche 28. Die Abstrahlfläche 28 ist in ein Flüssigkeits-/Gasgemisch 30 eingetaucht, während die Innenelektrode 20 frei liegt. Die eingebrachte Energie wird damit hauptsächlich über die Abstrahlfläche 28 in das Flüssigkeits-/Gasgemisch 30 eingeleitet, und zwar in Form von Druckwellen, die schematisch mit den Wellenfronten 32a bis 32e dargestellt sind. Gegen die (Druck-)Wellenfronten 32a bzw. 32e versetzt bestehen Unterdruck-Wellenfronten, die ebenfalls äquidistant sind und sich mit der gleichen Wellenfortpflanzungsgeschwindigkeit $V_F$ fortpflanzen.

Die Abstrahlfläche 28 ist im wesentlichen eben, wobei der Grad der Durchbiegung aufgrund der erzeugten Schwingung vernachlässigt werden kann. Dementsprechend ist die Wellenfront 32a ebenfalls im wesentlichen eben, weist jedoch bereits eine leichte Krümmung auf, die darauf zurückzuführen ist, daß der Durchmesser des Piezoelements 12 endlich ist.

Über die Wellenfronten 32a bis 32e betrachtet, nimmt die Krümmung zu, wobei der Krümmungsradius der Wellenfront 32e Annäherungsweise der Entfernung zur Abstrahlfläche 28 entspricht, jedoch etwas größer als diese Entfernung ist.

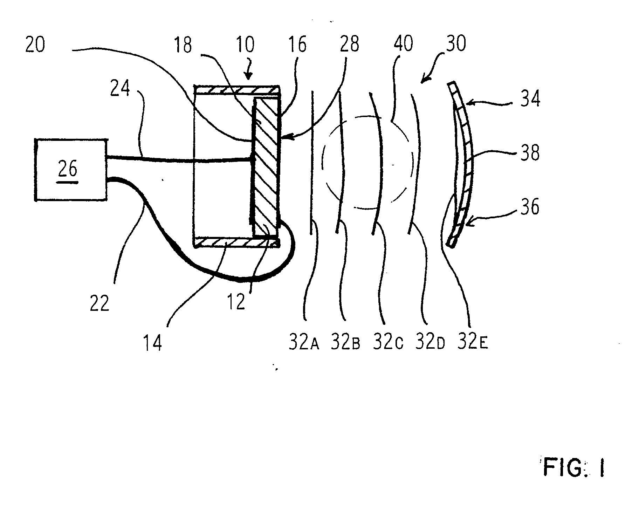

Wie aus Fig. 1 ersichtlich ist, trifft die Wellenfront 32e zunächst in den Bereichen 34 und 36 auf eine Reflexionswand 38 auf und wird dort reflektiert. Entsprechend der gegenüber der Wellenfront 32e stärkeren Krümmung der Reflexionswand 38 wird die Wellenfront 32e dann kurze Zeit später auch in dem mittleren Bereich zwischen den Bereichen 34 und 36 reflektiert. Die Darstellung gemäß Fig. 1 stellt den Unterschied der Krümmungsradien übertrieben dar. Bereits ein leichter Unterschied bewirkt, daß die reflektierte Wellenfront dann mit einer erheblich abgeschwächten Maximalamplitude wieder an der Abstrahlfläche 28 anlangt, so daß dort ungünstige Zusatzbelastungen vermieden werden können.

Die Krümmung der Reflexionswand 38 ist so ausgelegt, daß die Wellenfronten 32a bis 32e zu einem Arbeitsbereich 40 hin reflektiert werden. Der Arbeitsbereich 40 ist damit einer besonders intensiven Beschallung ausgesetzt. Der Arbeitsbereich 40 eignet sich damit besonders als Reaktionsbereich.

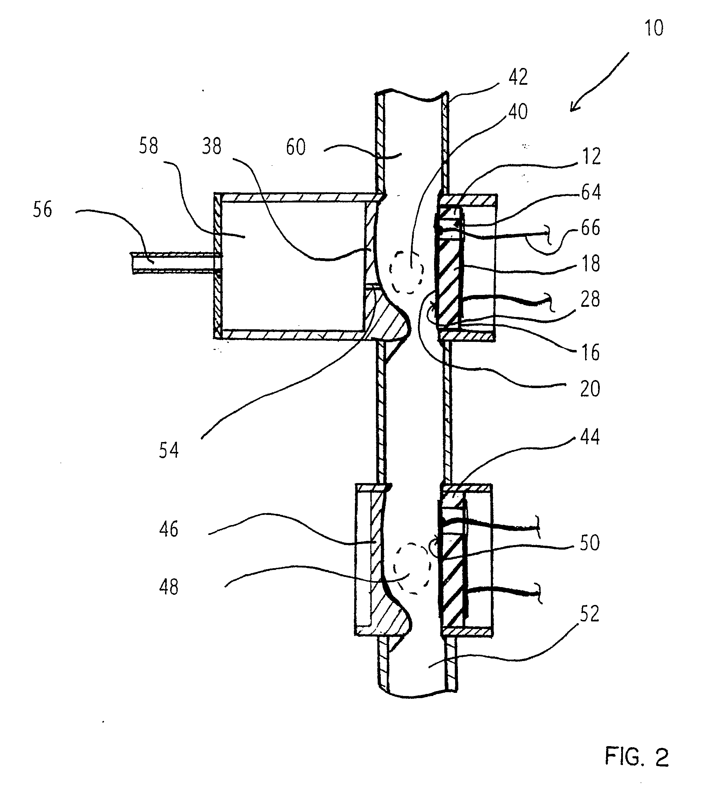

Der in Fig. 2 dargestellte erfindungsgemäße Schallwandler in einer weiteren Ausführungsform unterscheidet sich von der Ausführungsform gemäß Fig. 1 dadurch, daß ein Rohr 42 vorgesehen ist, in dessen Verlauf zwei Piezoelemente 12 und 44, je samt den zugehörigen Reflexionswänden 38 und 46, vorgesehen sind. Die Reflexionswände 46 und 38 sind gegenüber der Reflexionswand 38 gemäß Fig. 1 anders gestaltet, wobei sie im wesentlichen die Form eines Parabelasts aufweisen. Hierdurch ergibt sich nicht nur die gewünschte leichte Entzerrung der Amplitudenspitzen, sondern auch die Focussierung je auf einen Arbeitsbereich 40, 48, der etwa in der Mitte zwischen der Abstrahlfläche 28 und der Reflexionswand 38 bzw. einer Abstrahlfläche 50 des Piezoelements 44 und der Reflexionswand 46 liegt.

Die Ausrichtung der Reflexionswände 38 und 46 ist hierbei so gewählt, daß eine Flüssigkeit 52, die in dem Rohr 42 strömt, zunächst den durch den Parabelast je verjüngten Teil des Strömungsquerschnitts durchströmt, so daß sich der Strömungsquerschnitt im Verlauf des Arbeitsbereichs erweitert.

Die Reflexionswände 38 und 46 sind im Strömungsverlauf hintereinander angeordnet, wobei die Reflexionswand 46 samt dem zugehörigen Piezoelement 44 vor der Reflexionswand 38 mit dem Piezoelement 12 von der Flüssigkeit 51 durchtreten wird.

Die Reflexionswand 38 weist im Unterschied zu der Reflexionswand 46 eine Durchtrittsausnehmung 54 auf, die an eine Gaszuleitung 56 angeschlossen ist. Zwischen der Gaszuleitung 56 und der Durchtrittsausnehmung 54 ist ein zylinderförmiger Raum 58 vorgesehen, der dem Druckausgleich dient. Die Durchtrittsausnehmung 54 wirkt praktisch als Düse, die Gas in den - in Strömungsrich tung gesehen - Beginn des Arbeitsbereichs 40 einleitet. Das Flüssigkeits/Gasgemisch 60, das so hergestellt wird, wird dann einer Schallbeaufschlagung mit Frequenzen von 200 MHz bis 2 GHz unterworfen.

Wenn das Flüssigkeits/Gasgemisch 60 in einem Kreislauf geführt wird, durchtritt es dann als Fluid 52 erneut das Rohr 42, so daß eine mehrfache Anreicherung möglich ist.

Die Frequenzen, mit denen die Piezoelemente 12 und 44 beaufschlagt werden, können gleich sein, sind vorzugsweise aber unterschiedlich, wobei zweckmäßigerweise das Piezoelement 44 mit einem Frequenzbereich zwischen 200 MHz und GHz in das Piezoelement 12 mit einem Frequenzbereich von 2 GHz bis 20 GHz beaufschlagt wird.

Es versteht sich, daß die Erfindung nicht auf eine parabelförmige Reflexionswand beschränkt ist.

Vielmehr könnte beispielsweise eine halbkugelförmige Reflexionswand verwendet werden, die in Strömungsrichtung leicht schräg zu einer Achse 62 des Rohres 42 angeordnet ist. Alternativ könnten zylindersegmentförmige Reflexionsflächen verwendet werden, wobei die Achse des Zylindersegments in der Achse 62 angeordnet sein könnte.

Gemäß einer weiteren Abwandlung ist es möglich, die Durchtrittsausnehmung 52 schräg anzuordnen, und zwar am hinteren Ende des Arbeitsbereichs 40, so daß das eintretende Gas aufgrund des Gasdrucks schräg gegen die Strömungsrichtung des Fluids 52 gedrückt wird und damit das Flüssigkeits-/Gasgemisch 60 den Arbeitsbereich 42 praktisch zweimal durchtritt.

Das Piezoelement 44 entspricht in seinem Aufbau dem Piezoelement 18. Es weist eine Innenelektrode 20 und eine Außenelektrode 16 auf, wobei die Außenelektrode 16 dem Fluid zugewandt ist. Die beiden Elektroden 16 und 20 sind in an sich bekannter Weise auf ein Piezokristall 18 aufkaschiert.

Um zu vermeiden, daß der Elektrodenanschluß für die Außenelektrode 20 durch das Fluid 52 geführt werden muß, ist in dem Piezokristall 18 des Piezoelements 12 eine kreisförmige Durchtrittsausnehmung 64 vorgesehen, die sich in einer entsprechenden Ausnehmung in der Innenelektrode 20 fortsetzt. Der Anschluß 66 für die Außenelektrode 16 ist zentral durch die Durchtrittsausnehmung 64 hindurchgeführt und hat von der Innenseite her metallischen Kontakt mit der Außenelektrode 16.

Gemäß einer abgewandelten Ausgestaltung der Erfindung weisen die Reflexionsflächen 38 und 46 mindestens in Teilbereichen bezogen auf den Arbeitsbereich 40 und 48 konvexe, also streuende Oberflächen auf. Die Oberfläche kann neben der erläuterten parabolischen, kreis- oder zylinderförmigen Ausgestaltung einen hyperbolischen, ellipsenförmigen oder anderen geeigneten Grundaufbau aufweisen, oder auch nach der Art einer Fresnellinse ausgebildet sein.

## Ansprüche

1. Schallwandler für die Beaufschlagung eines Fluids mit Schall, mit (einem Piezoelement, dessen Abstrahlfäche in Druckverbindung mit dem Gemisch steht, dadurch **gekennzeichnet,** daß eine Reflexionswand (38, 46) vorgesehen ist, die Schall in einem Arbeitsbereich (40, 48) zwischen dieser und der Abstrahlfläche (28, 50) bündelt.

2. Schallwandler nach Anspruch 1, dadurch gekennzeichnet, daß die Reflexionswand (38, 46) im wesentlichen als Parabelast ausgebildet ist und der Abstrahlfläche (28, 50), bezogen auf das sich zwischen dieser und der Abstrahlfläche (28, 50) befindliche Fluidvolumen, gegenüberliegt.

3. Schallwandler nach einem der vorhergehenden Ansprüche, dadurch gekennzeichnet, daß die Abstrahlfläche (28, 50) sich im wesentlichen parallel zu einer Stromrichtung erstreckt, in welcher das Fluid (52) strömt, und daß eine Gaszuleitung (56) seitlich und quer zu der Strömungsrichtung vorgesehen ist.

4. Schallwandler nach einem der vorhergehenden Ansprüche, dadurch gekennzeichnet, daß eine Gaszuleitung (56) mit einer Achse vorgesehen ist, die sich im wesentlichen senkrecht zur Strömungsrichtung des Fluids (52) erstreckt, und die Gaszuleitung (56) insbesondere die Reflexionswand (38, 46) durchtritt.

5. Schallwandler nach einem der vorhergehenden Ansprüche, dadurch gekennzeichnet, daß eine Gaszuleitung (56) vorgesehen ist, die am Beginn des Arbeitsbereichs (40), gesehen in Strömungsrichtung des Fluids (52), mündet.

6. Schallwandler nach einem der vorhergehenden Ansprüche, dadurch gekennzeichnet, daß der Strömungsquerschnitt des Flüssigkeits-/Gasgemisches sich im Arbeitsbereich (40, 48) in Strömungsrichtung erweitert.

7. Schallwandler nach einem der vorhergehenden Ansprüche, dadurch gekennzeichnet, daß eine Mehrzahl, insbesondere zwei, Piezoelemente (12, 44) in Strömungsrichtung hintereinander angeordnet sind, die je bündelnde Reflexionswände (38, 46) aufweisen, und daß eine Gaszuleitung (56) seitlich zu einem der Piezoelemente (12, 44), insbesondere dem in Strömungsrichtung nachgeschalteten, mündet.

8. Schallwandler nach einem der vorhergehenden Ansprüche, dadurch gekennzeichnet, daß das Piezoelement (12, 44) in an sich bekannter Weise einen kreisförmigen Aufbau aufweist und aus zwei von einem Piezokristall (18) getrennten Elektroden (20, 16) besteht und daß eine Durchtrittsausnehmung (64) für einen Anschluß (66) einer Elektrode (16), die andere Elektrode (20) und den Piezokristall (18) durchtretend, vorgesehen ist, über welchen die eine Elektrode (16) mit Spannung versorgbar ist.

9. Schallwandler nach einem der vorhergehenden Ansprüche, dadurch gekennzeichnet, daß eine der Reflexionswand (38, 46) zugewandte Elektrode (16) des Piezoelements (18, 44) unmittelbar in das Fluid (52) eintaucht und antikorrosiv, bezogen auf die verwendete Flüssigkeit, ausgestattet ist.

10. Schallwandler nach einem der vorhergehenden Ansprüche, dadurch gekennzeichnet, daß die Flüssigkeit eine wäßrige Ammoniaklösung und das Gas Stickstoff ist.

11. Schallwandler nach einem der vorhergehenden Ansprüche, dadurch gekennzeichnet, daß das Piezoelement (18, 44) mit einem Generator (26) verbunden ist, mit welchem Schwingungen mit einer Frequenz von 20 MHz bis 20 GHz, insbesondere von 200 MHz bis 2 GHz, erzeugbar sind.

12. Schallwandler nach einem der vorhergehenden Ansprüche, dadurch gekennzeichnet, daß ein Generator (26) für die Versorgung des Piezoelements (18, 44) vorgesehen ist, dessen Frequenz kontinuierlich, insbesondere von 2 GHz bis 200 MHz, änderbar ist.

13. Schallwandler nach einem der vorhergehenden Ansprüche, dadurch gekennzeichnet, daß eine Mehrfachanordnung von Piezoelementen (18, 44), die je schallbündelnden Reflexionswänden (38, 46) gegenüberstehen, mit Generatoren (26) verbunden sind, deren Frequenzen aufeinander synchronisiert und gegenläufig änderbar sind.

14. Schallwandler nach einem der vorhergehenden Ansprüche, dadurch gekennzeichnet, daß ein druckdichter Behälter vorgesehen ist, über welchen das Flüssigkeits/Gasgemisch auf einen für die Erzielung einer sonochemischen Reaktion ausreichenden Druck bringbar ist.

15. Schallwandler nach einem der vorhergehenden Ansprüche, dadurch gekennzeichnet, daß er in dem Kältemittellösungs-Kreislauf einer nach dem Absorberprinzip arbeitenden Kältemaschine angeordnet ist und dort als Austreiber wirkt.

16. Schallwandler nach Anspruch 15, dadurch gekennzeichnet, daß der Eingangsanschluß eines Rohres (52) des Schallwandlers über eine Leitung mit einem Sammler für ein Flüssigkeits/Gasgemisch in Verbindung steht und die Gaszuleitung (26) mit einem Absorber in Verbindung steht und der Ausgangsanschluß des Rohres (52) mit einem Kondensator in Verbindung steht.

FIG. I

FIG. 2